# FASCICULE DE BREVET EUROPEEN

(11) **EP 3 164 209 B1**
(45) Date de publication et mention de la délivrance du brevet: **19.09.2018**
(21) Numéro de dépôt: 15732255.3
(22) Date de dépôt: 29.06.2015
(51) Int. Cl.: B01J 20/18, B01J 20/16, B01J 20/22, B01J 20/28, B01J 20/32, C01B 33/26

(54) **APPLICATION D'ALUMINOSILICATES HYBRIDES**
ANWENDUNG VON HYBRIDEN ALUMINOSILIKATEN
APPLICATION OF HYBRID ALUMINOSILICATES

(30) Priorité: 03.07.2014 FR 1456381
(43) Date de publication de la demande: 10.05.2017
(73) Titulaire: Commissariat à l'Énergie Atomique et aux Énergies Alternatives, 75015 Paris (FR)
(72) Inventeur: PONCELET, Olivier, 38000 Grenoble (FR); THILL, Antoine, 92260 Fontenay aux Roses (FR)
(74) Mandataire: Nony
(86) Numéro de dépôt international: PCT/EP2015/064711
(87) Numéro de publication internationale: WO 2016/001148

(56) Documents cités:
- IT-A1- TO20 070 765
- JP-A- 2002 159 850
- Cristina Zanzottera: "Hybrid organic/inorganic nanotubes of imogolite type [PhD thesis]", PhD in Material Science and Technology Cycle XXIV, mars 2012 (2012-03), pages 1-202, XP055208942, Torino Extrait de l'Internet: URL:http://porto.polito.it/2496100/1/PhD_T hesis_Zanzottera.pdf [extrait le 2015-08-21]
- ILARIA BOTTERO ET AL: "Synthesis and characterization of hybrid organic/inorganic nanotubes of the imogolite type and their behaviour towards methane adsorption", PHYSICAL CHEMISTRY CHEMICAL PHYSICS, vol. 13, no. 2, 1 janvier 2011 (2011-01-01), page 744, XP055074055, ISSN: 1463-9076, DOI: 10.1039/c0cp00438c
- BARBARA BONELLI ET AL: "Surface properties of alumino-silicate single-walled nanotubes of the imogolite type", PHYSICAL CHEMISTRY CHEMICAL PHYSICS, vol. 15, no. 32, 1 janvier 2013 (2013-01-01), page 13381, XP055074059, ISSN: 1463-9076, DOI: 10.1039/c3cp51508g

## Description

La présente invention concerne l'application d'allophanes et d'imogolites hybrides à titre de véhicule pour substances hydrophobes.

Comme il ressort de ce qui suit, les inventeurs ont constaté que, contre toute attente, les particules creuses d'aluminosilicates de types imogolite ou allophane hybrides s'avèrent tout particulièrement efficaces à ce titre.

Les polymères d'aluminosilicates de type imogolite et allophane sont largement connus. Ainsi, les filaments d'imogolite (OH)₃Al₂O₃SiOH sont naturellement présents dans les gisements naturels mélangés aux allophanes qui eux sont des sphères d'aluminosilicate de même formule brute et qui présentent la même anisotropie chimique. La surface externe de ces aluminosilicates naturels est recouverte d'Al-OH alors que leur surface interne est recouverte de Si-OH.

Tous deux sont des produits de grand intérêt et peuvent aujourd'hui être synthétisés avec différents degrés de pureté par différentes méthodes.

Ainsi, un procédé d'obtention d'un gel d'imogolite à haut degré de pureté est notamment décrit dans la demande de brevet EP-A-1 112 959. Ce procédé consiste à traiter un alcoxyde mixte d'aluminium et de silicium avec une base aqueuse à un pH entre 4 et 6,5, en maintenant la concentration molaire en aluminium entre 5.10⁻⁴ et 10⁻² M et le rapport molaire Al/Si entre 1 et 3, puis à chauffer le mélange obtenu en présence de groupes silanol pendant une période suffisante pour former le polymère d'aluminosilicate fibreux et à éliminer les ions résiduels du milieu réactionnel. Pour sa part, le brevet US-A-6 254 845 décrit un procédé de préparation des sphères creuses de polymères d'aluminosilicate amorphe. Ce procédé consiste à mélanger à vitesse élevée un composé à base de silicium (0,01 à 1 mol/L) avec un composé d'aluminium (0,01 à 1 mol/L) pour former une suspension comprenant des particules de précurseur et un sel en solution (sous-produit), à éliminer une partie dudit sel en solution et à soumettre les particules de précurseur à un traitement thermique de manière à obtenir un matériau poreux sous forme de sphères creuses d'aluminosilicate. D'autres procédés sont décrits dans FR 2 872 736, FR 2 802 912 et FR 2 740 465.

Plus récemment, la synthèse de nouveaux imogolites hybrides synthétiques a été décrite (FR 2 842 515 ; C. Zanzottera et al. J. Phys. Che. C 2012, 116, 7499-7506). Ces produits sont originaux car l'intérieur du tube est entièrement tapissé de motifs méthyle ce qui confère un caractère hydrophobe à la cavité (voir notamment Cristina Zanzottera (2012). Hybrid organic/inorganic nanotubes of imogolite type - PhD thesis in Material Science and technology Cycle XXIV, Politechnico di Torino). Les paramètres de synthèse permettent de contrôler la longueur des filaments et donc le volume interne utile des tubes d'imogolites.

Il existe également un document FR 2 842 515 décrivant un procédé pour synthétiser des allophanes, dont la cavité interne n'est que partiellement tapissée en motifs hydrocarbonés. Ainsi, la surface interne de la sphère est recouverte de 50 % en nombre de Si-OH et de 50 % en nombre de Si-R avec R étant par exemple un groupe méthyle ou vinyle. Au regard de sa partielle fonctionnalisation avec un groupe hydrocarboné, ce type d'allophane peut être qualifié de partiellement hybride. Il est à noter que le diamètre de ces particules creuses est plus important que celui des allophanes naturels, vraisemblablement une conséquence de la présence des motifs hydrocarbonés plus encombrants que les fonctions hydroxyles natives. La société déposante a également très récemment découvert qu'il est possible de disposer d'allophanes totalement hybrides à coeur, c'est à dire à 100 %, sous réserve de les préparer selon un procédé spécifique, notamment illustré en exemple 2 ci-après.

Toutefois, à la connaissance des inventeurs, ces aluminosilicates hybrides de type imogolite ou allophane n'ont jamais été proposés à des fins de véhicules de substances hydrophobes relevant notamment d'un intérêt dans le domaine pétrolier.

Or, les inventeurs ont constaté que les imogolites et allophanes hybrides s'avèrent particulièrement intéressantes à ce titre.

Tout d'abord, elles peuvent être efficacement utilisées pour le piégeage de contaminants hydrophobes à l'image de ceux rencontrés notamment dans des milieux naturels d'environnement eau, air et sols. Ainsi, les environnements aqueux à l'image de l'univers marin, de même que les fluides pétroliers sont malheureusement pollués par des contaminants de tout type et qui y sont naturellement ou non générés.

Il est ainsi connu que, lorsque des milieux aqueux, contenant diverses molécules gazeuses, comme par exemple le dioxyde de carbone, et des hydrocarbures tels que le méthane, l'éthane, etc... qui y sont dissous, sont laissés à une température particulière sous une pression particulière, il y est formé des hydrates de clathrates qui sont des cristaux où les molécules gazeuses dissoutes sont prises au piège dans les cages de molécules d'eau. Ces hydrates de clathrates sont souvent formés dans des canalisations à travers lesquelles le pétrole et le gaz naturel sont produits et transportés, obstruant ainsi les conduits. Ceci pose un sérieux problème en termes de sécurité des puits pour le pétrole et le gaz naturel. Pour empêcher la formation d'hydrates de clathrates, il est classiquement introduit, dans les canalisations à travers lesquelles l'hydrocarbure et le gaz naturel sont produits et transportés, des substances à l'image par exemple des glycols ou même des liquides ioniques (WO2009114674 A1) pour inhiber la croissance, l'agglomération et le dépôt de ceux-ci. Malheureusement, ces substances perdurent dans le matériau ainsi traités et se pose alors le problème de leur élimination.

Les imogolites et allophanes hybrides tels que considérés selon l'invention sont précisément susceptibles de constituer un moyen de purification efficace à cet égard.

En ce qui concerne les fluides pétroliers, l'usage des imogolites et allophanes hybrides tels que considérés selon l'invention s'avère en outre avantageux sur des aspects complémentaires et notamment en relation avec les techniques de récupération assistées du pétrole ou encore des hydrocarbures (EOR) développées pour accroître la rentabilité des puits pétroliers. Ces techniques reposent sur la mise en oeuvre d'ajustement(s) complémentaire(s) au niveau des techniques d'extraction. Elles visent généralement à réduire la tension interfaciale eau-hydrocarbure, à altérer la mouillabilité de surface et/ou à augmenter la mobilité du fluide à extraire via une augmentation de la viscosité du fluide de forage. L'un de ces ajustements repose ainsi sur la mise en oeuvre de matériaux nanoparticulaires et notamment de nanoparticules de silice (A Roustaei et al., Egyptian Journal of Petroleum, (2013), 22, 427-433 ; H. Shamsi Jazeyi et al., J. Appl. Polym. Sci. (2014), 131, 40576). Les particules d'aluminosilicates considérées selon l'invention s'avèrent ainsi particulièrement avantageuses pour purifier ces fluides hydrocarbonés mais également pour participer à la récupération assistée des hydrocarbures en tant qu'agent viscosifiant et/ou agent de modification de la mouillabilité des roches.

Par ailleurs, elles apparaissent être également un moyen efficace pour véhiculer dans ce type de fluide des substances d'intérêt à l'image des tensio-actifs, des biocides voire les inhibiteurs de clathrates de méthane discutés ci-dessus.

Ainsi, la présente invention décrit l'utilisation de particules creuses d'aluminosilicates hybrides de type imogolite ou allophane, caractérisées en ce qu'elles possèdent leur surface externe fonctionnalisée avec des motifs Al-OH et leur surface interne fonctionnalisée au moins en partie avec des motifs Si-R, avec R représentant un motif non hydrolysable, de préférence hydrocarboné, à titre de véhicule pour une ou plusieurs substances hydrophobes, notamment d'intérêt dans l'industrie pétrolière, lesdites substances hydrophobes étant choisies parmi tout composé contenant une chaîne aliphatique, linéaire ou ramifiée, comprenant au moins 4 atomes de carbone, les tensioactifs, les biocides et les inhibiteurs de clathrates de méthane.

Selon une première variante, la substance hydrophobe est dédiée à être incorporée dans un milieu via ladite particule au préalable chargée en ladite substance. Une telle substance peut notamment être un composé d'intérêt pour les techniques de récupération assistées du pétrole ou encore des hydrocarbures (EOR) et être en particulier choisie parmi les tensioactifs, les biocides et les inhibiteurs de clathrates de méthane.

Selon cette variante, les particules sont de préférence des particules de type allophane totalement hybride.

Selon une seconde variante, la substance véhiculée selon l'invention est dédiée à être piégée et/ou extraite par ladite particule d'aluminosilicate non chargée.

En particulier, l'invention concerne l'utilisation de particules creuses d'aluminosilicates hybrides de type imogolite ou allophane pour l'extraction de corps gras dans des milieux en bioréacteur, caractérisées en ce qu'elles possèdent leur surface externe fonctionnalisée avec des motifs Al-OH et leur surface interne fonctionnalisée au moins en partie avec des motifs Si-R, avec R représentant un motif non hydrolysable, de préférence hydrocarboné, à titre de véhicule pour une ou plusieurs substances hydrophobes, notamment considérées dans l'industrie pétrolière, lesdites substances hydrophobes étant choisies parmi tout composé contenant une chaîne aliphatique comprenant au moins 6 atomes de carbone, linéaire ou ramifiée, les tensioactifs, les biocides et les inhibiteurs de clathrates de méthane, et dans laquelle ladite substance est piégée et/ou extraite par ladite particule d'aluminosilicate non chargée.

Dans le domaine d'application pétrolier, cette substance peut être par exemple un inhibiteur de clathrates de méthane. Cette variante d'utilisation, peut ainsi être assimilée à une purification par piégeage de substances contaminantes.

Une telle utilisation peut également être intéressante pour extraire un ou plusieurs corps gras indésirables dans des milieux d'extraction en bioréacteur.

Au sens de la présente invention, le terme hybride entend caractériser le fait que, par opposition à des aluminosilicates de type imogolite ou allophane conventionnels, c'est-à-dire non fonctionnalisés au niveau de leur cavité interne, les aluminosilicates considérés selon l'invention possèdent au moins en partie des motifs Si-R avec R étant un motif non hydrolysable et notamment hydrocarboné au niveau de leur cavité interne. En d'autres termes, les particules creuses d'aluminosilicates hybrides possèdent une cavité dotée d'un caractère hydrophobe.

Cette fonctionnalisation des motifs Si-OH en motifs Si-R, peut être partielle ou totale (100 %). Au sens de l'invention, le terme hybride couvre ces deux modes de réalisation.

Tout d'abord, les allophanes et/ou imogolites, classiques ou hybrides, manifestent une stabilité thermique exceptionnelle. Ils sont en effet stables jusqu'à 250 °C, voire plus pour les hybrides, avant de se décomposer. Cette résistance thermique, les rends compatibles pour un usage dans les puits de forage.

Par ailleurs, ils s'avèrent chimiquement stables pour une plage de pH étendue, à savoir variant de 2 à 11.

Qui plus est, les surfaces extérieures des tubes d'imogolite ou des sphères d'allophane peuvent être facilement modifiées par sol-gel ou par ajout d'acides carboxyliques ou d'acides phosphoniques fonctionnels ou non. Ils peuvent donc être spécialement adaptés au milieu dans lequel ils vont être utilisés.

Enfin, des substances adsorbées à l'intérieur des cavités hydrophobes des imogolites et/ou allophanes hybrides ne « désorbent » pas dans un mélange eau/éthanol. Le piégeage s'avère donc particulièrement efficace.

A l'inverse, toute substance piégée au sein de ces cavités peut efficacement en être extraite au CO₂ supercritique. En conséquence, à l'issue d'une telle extraction les particules d'allophane et/ou d'imogolite hybrides sont avantageusement réutilisables.

Selon une première variante de l'invention, les particules hybrides sont de type imogolite et la surface interne de leur tube est au moins en partie fonctionnalisée avec des motifs Si-R.

Au sens de l'invention, R est de préférence un groupe alkyle ou alcényle linéaire ou ramifié en C₁-C₁₂.

De préférence, R représente un groupe méthyle, éthyle, propyle, butyle et/ou vinyle et, de manière encore plus préférée, R est un groupe méthyle et/ou vinyle.

Les aluminosilicates hybrides de type imogolite, peuvent notamment être préparés selon les procédés décrits dans FR 2 842 515. Un autre procédé de préparation est également proposé dans l'exemple 1 ci-après.

Conviennent tout particulièrement à l'invention les imogolites hybrides à 100 %.

Selon une deuxième variante, les particules hybrides sont de type allophane et la surface interne de leur sphère est au moins en partie de préférence totalement fonctionnalisée avec des motifs Si-R. Les aluminosilicates partiellement hybrides peuvent notamment être préparés selon le procédé décrit dans FR 2 842 515.

Dans cette variante de réalisation, conviennent tout particulièrement à l'invention les particules d'aluminosilicates hybrides de type allophane dans lesquelles R représente un motif vinyle et/ou méthyle.

Conviennent également tout particulièrement à l'invention les allophanes hybrides à 100 % notamment tels que récemment préparés par les inventeurs et comme illustré en exemple 2.

Plus précisément, ces allophanes hybrides à 100 % peuvent être préparés selon une technologie comprenant au moins les étapes consistant à
(a) disposer à température ambiante d'un milieu aqueux contenant au moins un précurseur d'aluminium et un alcoxyde de silicium dans un rapport molaire Al/Si variant de 1 à 3,
(b) procéder sous agitation à l'hydrolyse alcaline dudit milieu avec addition progressive d'au moins une base dans un rapport molaire base/Aluminium de 1,5 à 3, de préférence de 2,3 à 3,
(c) maintenir, à l'issue de l'addition de la totalité de la base, l'agitation à température ambiante jusqu'à obtention dudit milieu à l'état limpide, notamment pendant au moins 6 heures et
(d) chauffer la solution obtenue à une température variant de 50 à 150 °C, pendant 2 à 8 jours,
les étapes (b) à (d) étant réalisées dans un réacteur constitué d'un matériau inerte chimiquement vis-à-vis des réactifs et dudit aluminosilicate attendu.

Selon une variante préférée, l'ensemble des étapes (a) à (d) sont réalisées au sein d'un même réacteur.

Plus particulièrement, le matériau constitutif dudit réacteur est dénué de groupe silanol et d'atome de fluor libre et à ce titre est différent du verre et du téflon. Avantageusement, le matériau constitutif du réacteur est choisi parmi l'inox, le polypropylène ou encore des porcelaines inertes notamment conformes à celles mises en oeuvre dans les réacteurs de chimie industrielle.

Selon une variante préférée, l'alcoxyde de silicium est de formule RSi(OR')₃ dans laquelle R' est un groupe alkyle en C₁ à C₂ et R un groupe hydrocarboné saturé ou insaturé en C₁ à C₂. Plus préférentiellement, il s'agit du méthyltriméthoxysilane (OCH₃)₃SiCH₃ et du vinyltriméthoxysilane (OCH₃)₃Si(CH=CH₂).

De manière générale, une substance est dite hydrophobe lorsqu'elle présente une très faible voire un total défaut d'affinité pour un milieu aqueux. Ce défaut d'affinité se traduit également par une très faible voire un défaut de solubilité aqueux. A titre indicatif un composé est dit immiscible dans l'eau si moins de 3 %, de préférence moins de 2 %, par exemple moins de 1 % en poids de ce composé est sous forme solubilisée dans l'eau.

En ce qui concerne les substances à véhiculer, elles peuvent être de nature très diverses dans la mesure où elles sont directement liées à la nature du milieu les contenant ou dédié à les contenir.

D'une manière générale, il s'agit de substances hydrocarbonées. Au sens de l'invention, il s'agit plus précisément de tout composé contenant une chaîne aliphatique, linéaire ou ramifiée, comprenant au moins 4 atomes de carbone, par exemple au moins 6 atomes de carbone, par exemple au moins 8 atomes de carbone, par exemple au moins 10 atomes de carbone. Il peut s'agir d'un composé lipophile ou amphiphile.

Par exemple, il peut être choisi parmi les huiles, ou leurs dérivés, liquides à températures ambiantes, notamment entre 15 et 30 °C, les graisses, ou leurs dérivés, pâteuses ou solides à température ambiante, notamment entre 15 et 30 °C par exemple à 25 °C ; les cires, ou leurs dérivés, solides à température ambiante, notamment entre 15 et 30 °C, par exemple à 25 °C. Ce corps gras peut être choisi parmi les mono, di et triglycérides d'acides gras et leurs esters méthylique ou éthylique, tel quel ou modifié (hydrogénation, hydroxylation, alcoxylation, alkylation...) ; les hydrocarbures insaturés dont la chaîne carbonée comprend au moins une liaison double ou triple (ex. : les alcènes, les alcynes et les composés aromatiques) et/ou hydroxylés; les acides gras dont la chaîne carbonée comprend au moins une liaison double ou triple (ex. : les alcènes, les alcynes et les composés aromatiques) et/ou hydroxylés; les alcool gras ; les amines grasses, etc..., les huiles animales ou d'origine animale ; les huiles siliconées ; les composés terpéniques ; les résines synthétiques porteuses d'un proton labile (fonctions hydroxyles, amines primaires et secondaire, thiol...) et/ou d'au moins une insaturation comme par exemple les résines à base de polybutadiène ou de polypropylène, les alcools, les esters, les éthers, les amides non aromatiques ou aromatiques, et leurs mélanges.

Comme évoqué précédemment, il peut également s'agir de tensioactifs lipophiles ou amphiphiles, de biocides, voire d'inhibiteurs de clathrates si l'on considère le pétrole ou un produit dérivé comme milieu d'application.

D'autres caractéristiques et avantages des particules selon l'invention, ressortiront mieux des exemples de réalisation de l'invention et de l'examen des figures annexées, présentés à titre illustratif et non limitatif du domaine de l'invention.

### Matériels et méthode

8 lots différents d'imogolite et/ou d'allophane et un lot de nanogibbsite ont été synthétisés et testés.
A-Imogolite classique (OH)₃Al₂O₃SiOH obtenu selon FR 2 802 912.
B- Allophane classique (OH)₃Al₂O₃SiOH obtenu selon FR 2 864 116.
C- Imogolite hybride (OH)₃Al₂O₃SiMe obtenu selon l'exemple 1 ci-après.
D- Imogolite hybride (OH)₃Al₂O₃SiMe (C. Zanzottera et al. J. of physical chemistry C nanomaterials and interfaces, 2012, vol 116, 13, 7499-7506).
E- Allophane Hybride (OH)₃Al₂O₃SiMe obtenu selon l'exemple 2 ci-après.
F- Allophane partiellement hybride (50/50) (OH)₃Al₂O₃Si1/2OHSi1/2CH₃ obtenu selon FR 2 842 515.
G-Allophane partiellement hybride (50/50) (OH)₃Al₂O₃Si1/2OHSi1/2CH=CH₂ obtenu selon FR 2 842 515. et
H- Nanogibbsite (C.K. Kumura, Journal of colloidal and interface Sciences, 2010, 352, 252-258).

Tous les lots ont été, avant usage, lavés à l'eau DI et concentrés par diafiltration et ultrafiltration sur une membrane polyéthersulfone de 10KD (module Millipore labscale TFF system).
- Les deux hydrophobes considérés pour les tests d'absorption sont le pyrène et le 9-Phénylanthracène.
- Tous les tests sont effectués en milieu chargé en cations monovalents et divalents qui sont les milieux classiques des « boues pétrolières ».
- La caractérisation de l'absorption du composé gras considéré est réalisée en modes qualitatif et quantitatif.

### Mode qualitatif :

Les deux composés hydrophobes par analogie aux corps gras considérés pour les tests d'absorption à savoir le pyrène et le 9-Phénylanthracène ont pour intérêt d'être fluorescents sous irradiation (à une longueur d'onde de 350-380 nm, ils émettent à 420-430 nm). Ainsi, quand le milieu réactionnel est irradié sous UVb, il émet une couleur bleue. Ceci permet de constater qualitativement l'absorption des composés aromatiques à la surface ou à l'intérieur des nanotubes et/ou des nanosphères. En revanche, ce mode de caractérisation de l'absorption ne peut pas être quantitatif compte-tenu de l'existence d'un phénomène de quenching à forte concentration en molécules aromatiques.

### Mode quantitatif :

Il s'agit d'un test gravimétrique. Ce type de test convient tout particulièrement aux imogolites ou allophanes 100 % hybrides qui ne contiennent pas d'eau piégée à coeur.

Ceux qui contiennent à coeur de l'eau (F et G par exemple où 50 % des sites internes sont recouverts de sites Si-OH hydrophiles susceptibles de piéger de l'eau ou, a fortiori, les allophanes et imogolites classiques A et B qui sont totalement hydrophiles) peuvent la conserver jusqu'à 250 °C avant de s'effondrer. Pour ce type de matériau, le protocole tel que décrit ci-dessus a été effectué sans ajout de composés aromatiques. Le différentiel de masse est donc effectué par rapport à cette mesure.

### Exemple 1

### Préparation de particules d'aluminosilicates de type imogolite à coeur hybride (C)

30 mL d'une solution d'aluminosilicate dont le rapport molaire aluminium/silicium est fixé à 2 et le rapport d'hydrolyse (rapport molaire hydroxyde de sodium/aluminium) est également fixé à 2, a été préparé comme suit :
Une solution aqueuse d'aluminium est préparée par dissolution de 0,487 g de perchlorate d'aluminium dans de l'eau pure afin d'obtenir une solution à 0,1 mol.L⁻¹, puis transvasée dans une fiole jaugée de 10 mL.

Une solution de 50 mL d'hydroxyde de sodium à 0,1 mol.L⁻¹ est préparée par dissolution de 0,2 g d'hydroxyde de sodium, puis transvasée dans une fiole jaugée de 20 mL.

La solution de perchlorate d'aluminium est transvasée dans un récipient en téflon contenant un barreau aimanté, puis mis sous agitation. Du méthyltriéthoxysilane (99,6 µL) est ajouté à la solution. La solution d'hydroxyde de sodium est ensuite ajoutée à un débit de 4 mL.min⁻¹ à l'aide d'une pompe péristaltique. Une fois l'addition terminée, le récipient en téflon est fermé et laissé sous agitation à température ambiante pendant une durée de 20 h, puis placé à l'étuve à 85 °C pendant 5 jours. La solution est ensuite lavée et filtrée plusieurs fois dans de l'eau pure en utilisant une membrane 30 kDa.

Les nanotubes hybrides d'imogolite ainsi préparés ont été lyophilisés sous forme solide. Une poudre blanche, très peu dense et volatile est obtenue.

Le rendement de cette synthèse est d'au moins 50 %.

### Exemple 2

### Préparation de particules d'aluminosilicates de type allophane à coeur hybride (E)

Dans un récipient en polypropylène ou en inox, on ajoute à 700 mL d'eau DI, 32,46 g d'Al(ClO₄)₃, 9H₂O. Le milieu est laissé sous agitation ½ h. On ajoute ensuite 4,53 g de MeSi(OMe)₃. Le milieu réactionnel homogène est maintenu sous agitation à température ambiante.

On ajoute ensuite à l'ampoule à brome une solution de soude fraiche (5,33g de NaOH dans 1333 mL d'eau DI). L'addition se fait à la vitesse de 250 mL par minute. Le milieu réactionnel est limpide après ¼ heure. Le milieu réactionnel est agité 12 heures à température ambiante avant d'être chauffé pendant 5 jours à 90 °C dans un récipient en polypropylène ou en inox. Après refroidissement à température ambiante, le milieu réactionnel est lavé (diafiltré) et concentré par ultrafiltration sur une membrane 10KD.

Le rendement en (OH)₃Al₂O₃SiMe par rapport à l'aluminium introduit est de 76 %.

### Exemple 3

### Test d'extraction de composés hydrophobes

0,2 g de cristaux de composés polyaromatiques (pyrène et 9-Phénylanthracène) sont dispersés dans 30 mL d'une solution aqueuse de NaCl (20 g/L) et CaCl₂(2 g/L). Il est à noter que le pyrène (mp : 150 °C) et le 9-Phénylanthracène (mp : 153 °C) sont très peu solubles dans l'eau.

10 mL d'une solution à 10 % massique en allophane ou imogolite testé sont ajoutés. Le milieu réactionnel est laissé sous agitation 5 heures. Le milieu réactionnel est ensuite centrifugé dans des tubes polypropylène munis de membrane PVDF de 0,1 µm de seuil de coupure pour les allophanes et de 0,25 µm pour les imogolites pour tenir compte de l'aspect ratio. Après l'étape de centrifugation/filtration, le milieu réactionnel est limpide et quasi-incolore. Il est ensuite dialysé contre 5 litres d'eau DI dans un tube Zellu Trans Roth en cellulose (MWCO : 4,000-6,000) pendant 2 jours. Finalement le milieu réactionnel est évaporé à sec et séché à l'étuve à 140 °C pendant 5 heures avant. La poudre récupérée est pesée et conservée sous argon.

Toutes les expériences ont été menées 3 fois sur des échantillons provenant du même lot sauf pour G et H pour lesquels les expériences n'ont été menées qu'une fois sur un même lot.

Pour l'échantillon E, il a été fait 2 lots E et E' qui ont été testés chacun 3 fois.

Pour H, l'échantillon de nanogibbsite, la centrifugation filtration se fait sur filtres de 0,250 µm.

Le tableau I ci-dessous donne les résultats d'extraction.

**Tableau I**

| Echantillons | Masse référence /10g théorique | Masse organique extraite | Rendement d'extraction | Fluorescence |
|---|---|---|---|---|
| A | 7,5g | <mg | | Oui |
| B | 8,5g | <mg | | Oui |
| c | 8g | 0,12g | 0,6 | Oui |
| D | 7,5g | 0,11g | 0,55 | Oui |
| E | 9,2g | 0,16g | 0,8 | Oui |
| E' | 8,9g | 0,15g | 0,75 | Oui |
| F | 8,5g | 0,05g | 0,25 | Oui |
| G | 8,3g | 0,03g | 0,15 | Oui |
| H | 9g | <mg | | Oui |

Manifestement, les allophanes et/ou imogolites 100 % hybrides (C, D, E et E') se sont révélées les plus performantes puisqu'elles permettent d'obtenir un rendement d'extraction respectivement de 60 %, 55 %, 80 % et 75 %.

Les allophanes hybride à 50 % adsorbent également, mais à une échelle moindre, les composés organiques.

### Exemple 4

### Résistance de l'adsorption

Le protocole de l'exemple 3 a été reproduit pour les lots D et E en pratiquant une dialyse contre 5 litres d'un mélange EtOH/eau (80/20 en volume) avant de refaire une autre dialyse dans l'eau DI.

Les résultats sont compilés dans le tableau II ci-dessous.

**Tableau II**

| Echantillons | Masse référence/10g théorique | Masse organique extraite | Rendement d'extraction | Fluorescence |
|---|---|---|---|---|
| D | 7,4g | 0,10g | 0,5 | Oui |
| E | 8,9g | 0,17g | 0,85* | Oui |

| | | | | |
|---|---|---|---|---|
| *L'augmentation observée du rendement d'extraction pour les allophanes hybrides pourraient provenir de l'adsorption parasitaire d'alcool. | | | | |

La dialyse en milieu alcoolique ne semble pas affecter le rendement d'extraction des allophanes et/ou imogolites hybrides.

## Revendications

1. Utilisation de particules creuses d'aluminosilicates hybrides de type imogolite ou allophane pour l'extraction de corps gras dans des milieux en bioréacteur, **caractérisées en ce qu'**elles possèdent leur surface externe fonctionnalisée avec des motifs Al-OH et leur surface interne fonctionnalisée au moins en partie avec des motifs Si-R, avec R représentant un motif non hydrolysable, de préférence hydrocarboné, à titre de véhicule pour une ou plusieurs substances hydrophobes, notamment considérées dans l'industrie pétrolière, lesdites substances hydrophobes étant choisies parmi tout composé contenant une chaîne aliphatique comprenant au moins 6 atomes de carbone, linéaire ou ramifiée, les tensioactifs, les biocides et les inhibiteurs de clathrates de méthane, et dans laquelle ladite substance est piégée et/ou extraite par ladite particule d'aluminosilicate non chargée.

2. Utilisation selon la revendication précédente dans laquelle lesdites particules sont de type imogolite avec R représentant un groupe alkyle ou alcényle linéaire ou ramifié en C₁-C₁₂.

3. Utilisation selon l'une quelconque des revendications précédentes dans laquelle lesdites particules sont de type imogolite avec R représentant un groupe méthyle, éthyle, propyle, butyle ou vinyle et, de préférence un groupe méthyle ou vinyle.

4. Utilisation selon l'une quelconque des revendications précédentes dans laquelle lesdites particules sont de type allophane avec R représentant un groupe méthyle ou vinyle.

5. Utilisation selon l'une quelconque des revendications précédentes dans laquelle la surface interne desdites particules est entièrement fonctionnalisée avec des motifs Si-R.

## Patentansprüche

1. Verwendung von hohlen Teilchen von Hybrid-Aluminosilikaten vom Imogolith- oder Allophan-Typ zur Extraktion von Fettsubstanzen aus Bioreaktor-Medien, **dadurch gekennzeichnet, dass** ihre Außenfläche mit Al-OH-Einheiten modifiziert ist und ihre Innenfläche zumindest teilweise mit Si-R-Einheiten modifiziert ist, wobei R für eine nicht hydrolysierbare Einheit, vorzugsweise eine Kohlenwasserstoff-Einheit, steht, als Vehikel für eine oder mehrere hydrophobe Substanzen, die insbesondere in der Erdölindustrie betrachtet werden, wobei die hydrophoben Substanzen aus Verbindungen mit einer linearen oder verzweigten aliphatischen Kette mit mindestens 6 Kohlenstoffatomen, Tensiden, Bioziden und Methan-Clathrat-Inhibitoren ausgewählt sind, und wobei die Substanz durch das ungeladene Aluminosilikat-Teilchen abgefangen und/oder extrahiert wird.

2. Verwendung nach dem vorhergehenden Anspruch, wobei die Teilchen vom Imogolith-Typ sind, wobei R für eine lineare oder verzweigte C₁-C₁₂-Alkyl- oder -Alkenylgruppe steht.

3. Verwendung nach einem der vorhergehenden Ansprüche, wobei die Teilchen vom Imogolith-Typ sind, wobei R für eine Methyl-, Ethyl-, Propyl-, Butyl- oder Vinylgruppe und vorzugsweise eine Methyl- oder Vinylgruppe steht.

4. Verwendung nach einem der vorhergehenden Ansprüche, wobei die Teilchen vom Allophan-Typ sind, wobei R für eine Methyl- oder Vinylgruppe steht.

5. Verbindung nach einem der vorhergehenden Ansprüche, wobei die Innenfläche der Teilchen vollständig mit Si-R-Einheiten modifiziert ist.

## Claims

1. Use of hollow particles of hybrid aluminosilicates of imogolite or allophane type for the extraction of fatty substances from bioreactor media, **characterized in that** they have their external surface functionalized with Al-OH units and their internal surface functionalized at least in part with Si-R units, with R representing a nonhydrolyzable unit, preferably a hydrocarbon unit, as vehicle for one or more hydrophobic substances, in particular considered in the oil industry, said hydrophobic substances being chosen from any compound containing a linear or branched aliphatic chain comprising at least 6 carbon atoms, surfactants, biocides and methane clathrate inhibitors, and in which said substance is trapped and/or extracted by said uncharged aluminosilicate particle.

2. Use according to the preceding claim, in which said particles are of imogolite type with R representing a linear or branched C₁-C₁₂ alkyl or alkenyl group.

3. Use according to any one of the preceding claims, in which said particles are of imogolite type with R representing a methyl, ethyl, propyl, butyl or vinyl group and preferably a methyl or vinyl group.

4. Use according to any one of the preceding claims, in which said particles are of allophane type with R representing a methyl or vinyl group.

5. Use according to any one of the preceding claims, in which the internal surface of said particles is entirely functionalized with Si-R units.
